(19)

Europäisches
Patentamt
European
Patent Office
Office européen
des brevets

(11) **EP 4 400 992 A1**

(12) **EUROPEAN PATENT APPLICATION**

(43) Date of publication:
**17.07.2024   Bulletin 2024/29**

(21) Application number: **23275006.7**

(22) Date of filing: **11.01.2023**

(51) International Patent Classification (IPC):
**G06F 18/25** (2023.01)

(52) Cooperative Patent Classification (CPC):
**G06F 18/253**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **BAE SYSTEMS plc**
**London SW1Y 5AD (GB)**

(72) Inventor: **The designation of the inventor has not
yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **HIERARCHICAL TEMPORAL MEMORY BASED AIR DATA ANOMALY DETECTOR**

(57)    The present invention relates to detecting anomalies in air data, in particular to the use of hierarchical temporal memory models to detect anomalies. According to a first aspect of this specification, there is described a computer method of anomaly detection in air data. The method comprises: receiving a plurality of sets of sensor data from a plurality of aircraft sensors (402), each set of sensor data comprising sensor data associated with a respective time in a time series of sensor data; encoding (404) the plurality of sets of sensor data to generate encoded representations of the plurality of sets of sensor data, each encoded representation corresponding to a respective time in the time series; sequentially inputting (406) the encoded representations of the plurality of sets of sensor data into a hierarchical temporal memory model; processing (408), by the hierarchical temporal memory model, the encoded representations of the plurality of sets of sensor to generate one or more anomaly scores indicative of an anomaly in the air data.

Figure 1

EP 4 400 992 A1

## Description

FIELD

The present invention relates to detecting anomalies in air data, in particular to the use of hierarchical temporal memory models to detect anomalies.

BACKGROUND

Failure to recognise valid but erroneous data has been a significant contributor to multiple aviation accidents. While humans can cognitively recognise a problem, they are unable to maintain the required attention over long durations, meanwhile machines which can maintain attention struggle to cognitively recognise valid but erroneous data. Standard validity checks compare data to a permitted range or cross compare multiple data sources to see if they agree. However valid but erroneous data will pass the former and can only be detected with the latter if multiple sources are available.

SUMMARY

According to an aspect of the present invention, there is provided a computer method of anomaly detection in air data, the method comprising: receiving a plurality of sets of sensor data from a plurality of aircraft sensors, each set of sensor data comprising sensor data associated with a respective time in a time series of sensor data; encoding the plurality of sets of sensor data to generate encoded representations of the plurality of sets of sensor data, each encoded representation corresponding to a respective time in the time series; sequentially inputting the encoded representations of the plurality of sets of sensor data into a hierarchical temporal memory model; processing, by the hierarchical temporal memory model, the encoded representations of the plurality of sets of sensor to generate one or more anomaly scores indicative of an anomaly in the air data.

This, and other, aspects of the present invention may include one or more of the following features, either alone or in combination.

Encoding the plurality of sets of sensor data to generated the encoded representations of the plurality of sets of sensor data may comprise, for each set of sensor data: encoding respective sensor data from each sensor with a respective encoding scheme to generate a plurality of subsets of encoded sensor data; and combining the plurality of subsets of encoded sensor data to generate the encoded representation of the set of sensor data. Combining the plurality of subsets of encoded sensor data may comprise concatenating the plurality of subsets of encoded sensor data. The method may further comprise, for each set of sensor data: encoding a time variable of the time series, the time variable corresponding to the respective time in the time series associated with the set of sensor data; wherein combining the plurality of subsets of encoded sensor data to generate the encoded representation of each set of sensor data further comprises combining the respective encoded time variable.

The method may further comprise causing an alert to be triggered based on the anomaly score. Causing an alert to be triggered based on the anomaly score may comprise: comparing the anomaly score to a threshold value; and if the threshold value is exceeded, causing the alert to be triggered.

The method may further comprise causing an aircraft to take remedial action based on the anomaly score.

The plurality of sets of sensor data from a plurality of aircraft sensors may be received as a stream. The operations of encoding the sensor data, inputting the encoded representation into the hierarchical temporal memory model and processing the encoded representations may be performed in real time as the plurality of sets of sensor data are received.

The method may further comprise updating the hierarchical temporal model based on the plurality of sets of sensor data using a Hebbian rule. Sets of sensor data that are classified as anomalous may be excluded from the update process.

Processing, by the hierarchical temporal memory model, the encoded representations of the plurality of sets of sensor to generate one or more anomaly scores indicative of an anomaly in the air data may comprise: predicting, using the hierarchical temporal memory model, a set of sensor data at a future time based on the processing of the encoded representations; receiving a further set of sensor data corresponding to the future time from the plurality of aircraft sensors; and comparing the received further set of sensor data to the predicted set of sensor data to determine the anomaly score.

The plurality of sets of sensor data may comprise one or more of: an altitude rate; an angle of attack; a flight phase; a true airspeed; and/or a roll rate.

According to a further aspect of the invention, there is provided a computer program product comprising computer readable instructions that, when executed by a computer, cause the computer to perform any one or more of the methods described herein.

According to a further aspect of the invention, there is provided a system comprising: a plurality of sensors; one or more processors; and a memory, the memory storing computer readable instructions that, when executed by the one or more processors, cause the system to perform any one or more of the methods disclosed herein.

According to a further aspect of the invention, there is provided an aircraft comprising: a plurality of sensors; one or more processors; and a memory, the memory storing computer readable instructions that, when executed by the one or more processors, cause the system to perform any one or more of the methods disclosed herein.

## BRIEF DESCRIPTION OF THE FIGURES

Embodiments of the invention will now be described by way of example only with reference to the figures, in which:

Figure 1 shows a schematic overview of an example method for detecting anomalies in air data using a hierarchical temporal memory model;
Figure 2 shows an example of an encoding scheme for a set of sensor data;
Figure 3 shows a schematic overview of an example HTM model;
Figure 4 shows a flow diagram of an example method for anomaly detection in air data;
Figure 5 shows a schematic overview of an aircraft comprising an anomaly detection system; and
Figure 6 shows a schematic overview of a computer system.

## DETAILED DESCRIPTION

This specification describes the use of Hierarchical Temporal Memory (HTM) models in an effort to recognise collective and contextual anomalies in air data, such as airspeed, angle of attack and lift. A stream of air data is fed into an HTM model, which processes it to generate anomaly scores for the input data. The anomaly scores may be used to trigger an alert for a pilot/flight crew, and/or to trigger remedial actions.

Broadly speaking there are three types of anomaly: (i) point anomalies, where individual data instance can be considered as anomalous with respect to the rest of data; (ii) contextual anomalies, data instance is anomalous in one or more specific contexts (but not otherwise); and (iii) collective anomalies, a collection of related data instances is anomalous with respect to the data set. Valid but erroneous data is typically either a contextual or a collective anomaly, which can be hard to identify using a simple thresholding based approach. Examples in the aviation realm include, but are not limited to: (i) an increase in airspeed which does not result in an altitude gain despite all other factors remaining constant, in the context of the other information the airspeed increase is anomalous; and (ii) Angle of Attack (AoA) 'freezing' on a single value. AoA typically exhibits a small about of noise, it is never fixed. Consequently, a collection of identical values occurring together is anomalous.

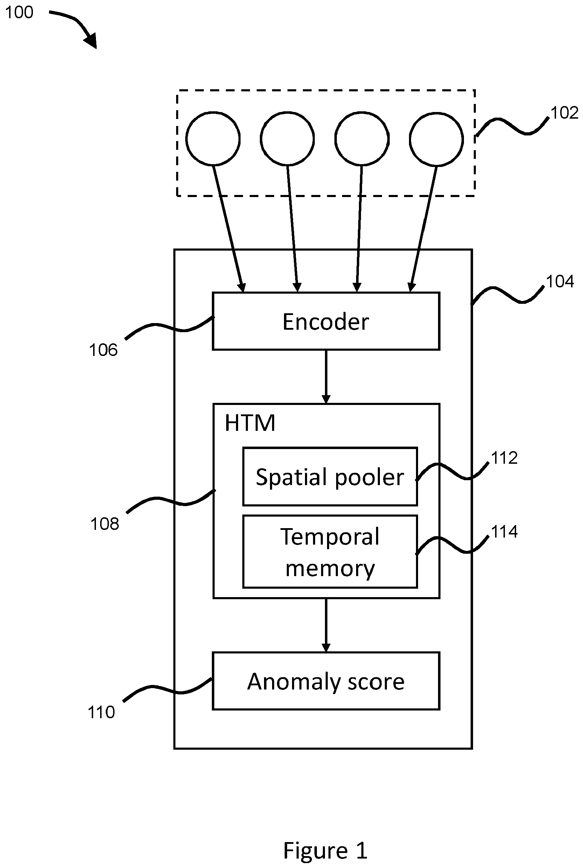

Figure 1 shows an overview of a method/system 100 for determining whether anomalies are present in air data using a hierarchical temporal memory (HTM) model. The method 100 may be implemented by one or more computers.

A plurality of sets of sensor data are received (e.g. streamed) from a plurality of sensors 102 on an aircraft by an anomaly detection system 104. The anomaly detection system 104 comprises an encoder 106 configured to encode the plurality of sets of sensor data into respective encoded representations suitable for use with a HTM model 108. The anomaly detection system 104 further comprises a HTM model 108 configured to receive the encoded representations of the sensor data as input sequentially, and process them to generate one or more anomaly scores 110 indicative of an anomaly being present (or absent) in the input sensor data. The process may be performed continuously as each set of sensor data is received, allowing anomalies to be detected in real time.

The plurality of sensors 102 may each sample one or more corresponding air data parameters at a respective sampling frequency to collectively generate a plurality of sets of sensor data, each set of sensor data corresponding to sensor data captured within a particular time window (e.g. every one second) or at a particular time. The sensor data captured by the sensors 102 may be streamed to an anomaly detection system.

As an example, the plurality of sensors may comprise one or more sensors configured to measure an altitude rate. The altitude rate may be measured by the corresponding sensors at a frequency of between 0.5Hz and 10Hz, e.g. 1 Hz or 4 Hz. Alternatively or additionally, the plurality of sensors may comprise one or more sensors configured to measure an angle of attack (AoA). The AoA may be measured by the corresponding sensors at a frequency of between 0.5Hz and 10Hz, e.g. 1Hz or 4 Hz. Alternatively or additionally, the plurality of sensors may comprise one or more sensors configured to measure a true and/or relative airspeed. The true and/or relative airspeed may be measured by the corresponding sensors at a frequency of between 0.5Hz and 10Hz, e.g. 1Hz or 4 Hz. Alternatively or additionally, the plurality of sensors may comprise one or more sensors configured to determine a flight phase of the aircraft, e.g. "pre-flight", "taxi", "take-off", "climb", "cruise", "approach", "rollout" and/or "unknown". The flight phase may be determined by the corresponding sensors at a frequency of between 0.5Hz and 5Hz, e.g. 1 Hz.

The encoder 106 is configured to encode the received sensor data into encoded representations, such as a sparse distributed representation (SDR). The encoder 106 may encode the sensor data collected in each sampling period alongside a timestamp for the sampling period.

A SDR is a bit vector of 1s and 0s in which the set of active bits (e.g. the 1s) encode semantic attributes of what is being represented. Each bit within an SDR may represent a unique attribute of the thing being represented by the SDR. Therefore, if two SDR's have a 1 in the same location it means that the objects or concepts being represented share that attribute.

In general, an SDR is defined by two properties: its size, $n$, i.e. the number of bits in the SDR; and its cardinality, $w$, i.e. the number of active bits in the SDR. The cardinality may also be represented as a sparsity, $s$, indicating the percentage of active bits in the total number of bits in the SDR. Choosing $n$ and $w$ for an SDR is a balancing act between capacity and the potential for two different concepts to be encoded in exactly the same way.

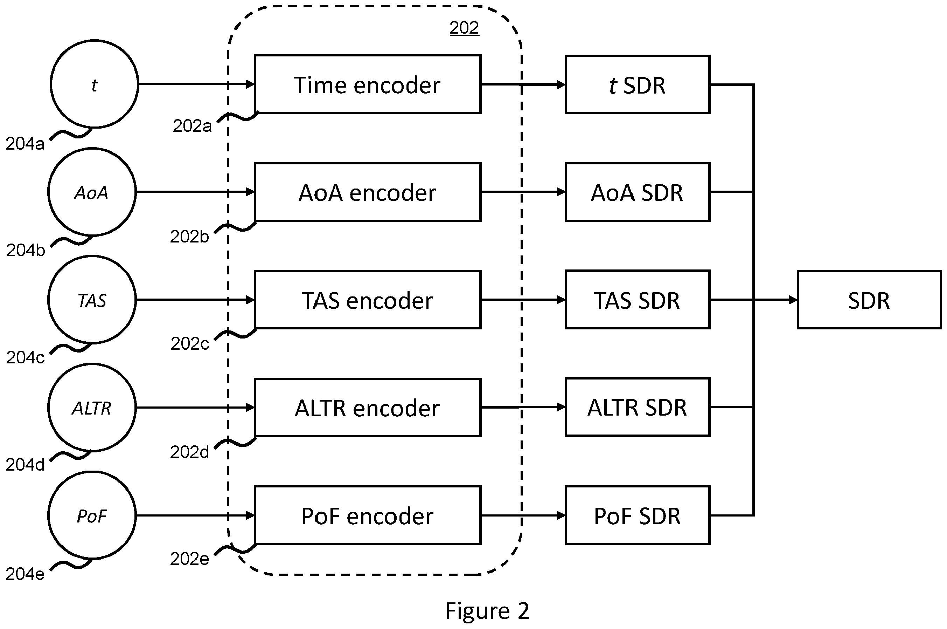

In some implementations, the encoder 106 may encode each set of sensor data into a respective SDR, then concatenate the respective SDRs to generate a combined SDR of the received sensor data. An example of such an encoding process is described below in relation to in Figure 2.

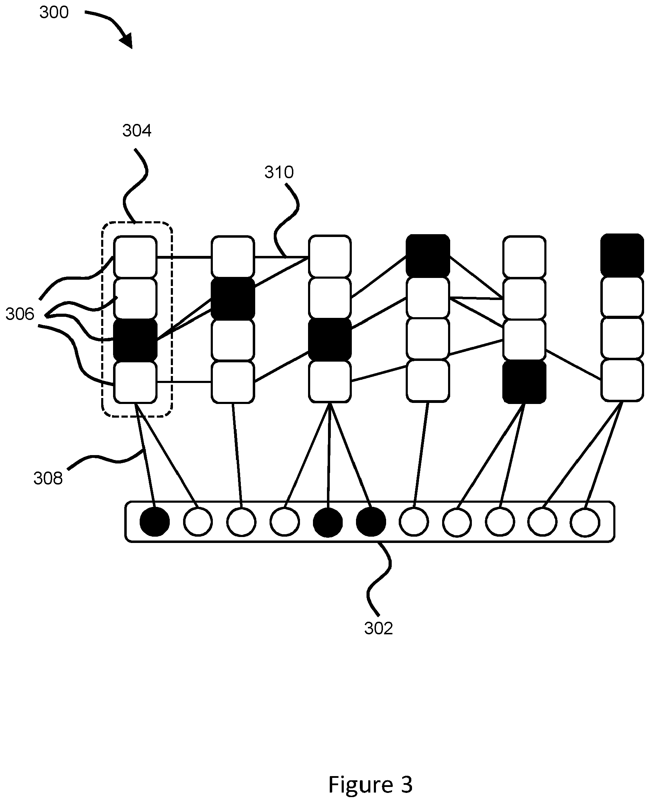

The HTM model 108 receives each set of sensor data sequentially and processes it through a spatial pooler 112 and temporal memory 114 in order to generate an anomaly score for the set of sensor data that is conditioned on previously received sets of sensor data. Details of HTM models are described in further detail below with respect to Figure 3.

The spatial pooler (SP) 112 is the part of the HTM model 108 that handles the spatial aspects of the spatio-temporal capability provided by HTM 108. Its role is to generate an input SDR for the temporal memory from the encoded representation of the sensor data in a manner that ensures that input patterns that share a large number of co-active neurons (i.e., that are spatially similar) are grouped together into a common output representation. The SP models the synaptic growth in the proximal dendritic segments, essentially it learns how an output is generated from inputs for a single sample set allowing it to produce sparse representations that still retain the semantic knowledge contained in the input. Examples of such a process are described in "The HTM Spatial Pooler-A Neocortical Algorithm for Online Sparse Distributed Coding" (Cui et al., Front Comput Neurosci. 2017 Nov 29; 11:111.), the contents of which are incorporated herein by reference.

The temporal memory (TM) 114 part of the HTM model 108 has two primary purposes. First, it learns sequences of SDRs allowing it to form a representation of the current SDR in a sequence that captures the temporal context given by preceding inputs and second, it uses what it has learnt to make predictions of the upcoming input.

The predictions of the TM 114 can be used to calculate one or more anomaly scores 110 for each input set of sensor data which can be used to determine whether that input contains an anomaly. Although generation of the anomaly scores 110 is not typically a function of the TM 114, it may be embedded within the TM 114 in some implementations.

The one or more anomaly scores 110 may be compared to one or more respective threshold score values to determine whether an anomaly is present in the input sensor data. For example, if one or more anomaly scores 110 exceeds a corresponding threshold value, an anomaly is detected to be present in the sensor data. Detection of an anomaly may cause the system to trigger an alert to be sent to aircrew of the aircraft that indicates an anomaly has been detected and, in some implementations, identifies the anomalous sensor data.

In some implementations, the anomaly score 116 may be used as a trigger for one or more further actions by the system. For example, based on the identified anomalous sensor data, the system may cause the aircraft to take remedial action.

Figure 2 shows an example of an encoding scheme 200 for a set of sensor data. An encoder 202 may encode a set of sensor data comprising a plurality of subsets of sensor data 204a-e to generate an SDR 208 of the sensor data corresponding to a particular time. In the example shown, the subsets of sensor data comprise: a time variable 204a, *t,* corresponding to the time the set of sensor data was captured at; an angle of attack (AoA) 204b; a true airspeed (TAS) 204c; an altitude rate (ALTR) 204d; and a phase of the flight (PoF) 204e. It will be appreciated that other examples are also possible. Either in addition or as an alternative. The encoder 202 encodes each subset of sensor data separately using a respective subset encoder 202a-e to generate a respective SDR 206a-e for each of them. The SDRs 206a-e are then combined (for example by concatenation) to form an overall SDR 208 for the dataset.

The time encoder 202a receives the time variable 204a as input and outputs a time SDR 206a representing the time. Typically, a time variable is comprises days, months, years, hours, minutes and seconds, for example in the format dd/mm/yyyy hh:mm:ss. However, typically a flight lasts less than one day, so the date data can be disregarded. The remaining time can be converted into a numerical representation, for example using:

$$Time = (h * 3600) + (m * 60) + s.$$

This has a minimum value of 0 and, for a 1Hz sampling rate, a maximum value of 86,399. To account for the "wrap around" from 23:59:59, the time variable should also be encoded in a cyclic manner. The time SDR 206a may have a resolution of between 1 and 10 seconds, e.g. 5 seconds (i.e. time SDRs 206a representing times 204a separated by more than 5 seconds will have no overlap, while values within 5 seconds of each other will have SDRs that may overlap to some extent based on their closeness). The time SDR 206a may have a sparseness of between 0.01 and 0.05, e.g. 0.02.

The angle of attack (AoA) encoder 202b receives the AoA variable 204b as input and outputs an AoA SDR 206b. In principle, the AoA can range from minus 90 to plus 90 degrees, but may be restricted to a narrower range in the case of civilian aircraft, for example between minus 45 and plus 45 degrees. The AoA SDR 206b may have a resolution of between 0.25 and 1 degree, e.g. 0.75 degrees (i.e. AoA SDRs 206b representing AOAs 204b separated by more than 0.75 degrees will have no overlap, while values within 0.75 degrees of each other will have SDRs that may overlap to some extent based on their closeness). The AoA SDR 206b may have a sparseness of between 0.01 and 0.05, e.g.

0.02.

The airspeed (TAS) encoder 202c receives the TAS variable 204c as input and outputs a TAS SDR 206c. The TAS can range from zero to the maximum speed of the aircraft, e.g. 500 knots. The TAS SDR 206c may have a resolution of between 0.5 and 5 knots, e.g. 1 Knot (i.e. TAS SDRs 206c representing TASs 204c separated by more than 1 knot will have no overlap, while values within 1 knot of each other will have SDRs that may overlap to some extent based on their closeness). The TAS SDR 206c may have a sparseness of between 0.01 and 0.05, e.g. 0.02.

The altitude rate (ALTR) encoder 202d receives the ALTR variable 204d as input and outputs an ALTR SDR 206d. The ALTR in normal operation can range from around minus 2200 to around 3700 feet per minute, though much larger values may occur during accident scenarios. However, the presence of such large values would by themselves be indicative of a problem, so the range of encodeable ALTR values may be clipped. For example, the encodeable ALTR values may range between -4000 and +4000 ft/min. The ALTR SDR 206d may have a resolution of between 5 and 25 ft/min, e.g. 16 ft/min (i.e. ALTR SDRs 206d representing ALTRs 204d separated by more than 16 ft/min will have no overlap, while values within 16 ft/min of each other will have SDRs that may overlap to some extent based on their closeness). The ALTR SDR 206d may have a sparseness of between 0.01 and 0.05, e.g. 0.02.

The phase of flight (POF) parameter 204e is a categorical parameter, contrary to the continuous values of the other variable described above. Each phase is distinct, with no semantic similarity between them. Consequently, the PoF 206e SDR may have a resolution of 1, i.e. there is no overlap in the encoding of the possible PoF values. In some embodiments, eight phases of flight are used: 0, an unknown phase; 1, a pre-flight phase; 2, a taxi phase; 3, a take-off phase; 4, a climb phase; 5, a cruise phase; 6, an approach phase; and 7, a rollout phase.

The SDRs 206a-e for the subsets of sensor data are combined to form the overall SDR 208 for the set of sensor data. For example, the SDRs 206a-e for the subsets of sensor data may be concatenated to form a one dimensional SDR representation of the whole set of sensor data. This SDR 208 is used as input to the HTM model.

Figure 3 shows a schematic overview of an example HTM model 300. The input to the HTM model comprises an SDR 302 encoding a set of sensor data captured by the plurality of sensors, which in this example is a one-dimensional array of bits, with 0 bits shown in white and 1 bits shown in black.

The HTM model 300 comprises a plurality of mini-columns 304, each of which comprises a plurality of cells 306. For the sake of illustration, there are six mini columns 304 and the mini-columns 304 have four cells 306, though other numbers of min-columns 304 and cells may alternatively be used. For example, each mini-column may have a number of cells between 4 and 15, e.g. 10. The number of columns may be between 1000 and 3000, for example 1638 columns.

Each mini-column 304 is associated with a proximal dendrite comprising one or more input synapses 308 connected to one or more elements of the input SDR 302. The proximal dendrite may provide a feedforward input to each of the cells 306 in its corresponding mini-column 304. Each mini-column 304 is associated with a set of potential elements in the input SDR 302 (the receptive field of the mini-column) with which it may potentially form input synapses 308. Each cell 306 has one or more distal dendrite segments (typically a plurality of distal dendrites), each comprising one or more synapses 310 (typically a plurality of synapses) connecting it to cells in other columns.

The spatial pooler is implemented via the proximal dendrites. Based on a number of active input synapses for each column 304 (i.e. synapses that connect to an input bit of 1 in the input SDR 302) and, in some implementations, a boosting factor, activation scores are determined for each column. Columns 304 with the strongest activation scores are activated, and inhibit the activation of nearby columns 304. Inhibition may be performed locally or globally. The set of active columns forms an SDR representation of the input SDR 302.

During learning, permanence values of input synapses 308 are adjusted based on whether they have been activated or not. The permanence value of a synapse defines whether it is connected or not; if it is above a threshold value, then the synapse is connected, if it is below a threshold value it is not connected. Synapses connected to active bits in the input SDR 302 (i.e. bit values of 1) are increased, while those connected to inactive bits in the input SDR 302 (i.e. bit values of 0) are decreased. The rate at which a SP learns is defined by how fast input synapse 308 permanence is either increased or decreased. The increase rate may be different to the decrease rate. Typically the decrease rate will be at most half of the increase rate. For example, the increase rate may lie in the range [0.02, 0.06], e.g. 0.04. The decrease rate may line in the range [0.001 to 0.01], e.g. 0.006.

It is desirable for a SP to utilise as much of its available capacity as possible. To encourage this a feature known as 'boosting' may be included within the SP algorithm. Boosting increases the permanence of 'quiet' cells which might otherwise never reach a high enough permanence to contribute. A boost factor of between 2 and 5 may be used, for example 3.

The temporal memory (TM) is implemented via the distal dendrites. The number of cells 306 per mini-column 304 is what defines the length of the sequences that TM can learn, or how far back in time the TM can look to establish the context for the latest input SDR 302. Choosing the number of cells per column is therefore a matter of deciding how much history should be considered when trying to predict the upcoming sequence entry.

Based on the active columns determined in the SP phase, the TM determines the active states of the cells 306 in the mini-columns 304. For an active column, if any cells are in a predictive state from a previous input, those cells are activated. If no cells in an active mini-column are in a predictive state, then all cells in that mini-column are activated. The active cells form an SDR of the current input in the context of previous inputs.

The TM then determines the predictive states of the cells 306 in the HTM. For each distal dendrite in the HTM, the TM determines whether the number of synapses in that dendrite that are linked to active cells exceeds a threshold number. If so, then the cell associated with that dendrite enters a predictive state, unless it has already been activated.

Like the SP the TM learns using a 'Hebbian' approach (Hebb, 1949) in which synapse permanence is incremented or decremented based on the contribution the synapse is making to the calculation. Configuration of TM learning is done by defining when and by how much the permanence should be adjusted. Learning is carried out when the number of active potential synapses is above a threshold value. For example, when a distal dendrite in the HTM becomes active, synapses in that dendrite that are linked to active cells have their permanence increased, while synapses linked to an inactive cell have their permanence decreased. The threshold value may, for example, be between 5 and 20, e.g. 10. The permanence increment and decrement may each be between 0.05 and 0.5, e.g. 0.1.

The output of the TM may be the set of columns containing an active or predictive cell. This may be interpreted as a prediction of the next SDR in the sequence of inputs.

The HTM may "pre-learn" (i.e. be trained) on a set of training data comprising flight data from real flights before use. Artificial anomalies may be inserted into the training data to test the performance of the HTM model.

In some implementations, once trained, learning may be disabled. Disabling learning after training 'locks' the model into a state which can be assessed and tested. This may be desirable if the model is to be certified. However, doing so also stops the model from learning during operation.

In some implementation, learning may be enabled during operation. Since the set of possible scenarios the model might encounter is vast and next to impossible to recreate fully for training purposes, continuous 'online' learning allows the model to learn and account for such scenarios.

However, if multiple anomalies are present over a long time period, the HTM may learn anomalous data as the "new normal" and cease to classify it is anomalous. To avoid this effect, in some implementations continuous learning is disabled for anomalous sensor data, i.e. the HTM does not update its synapse permanence if the input data is classified as anomalous.

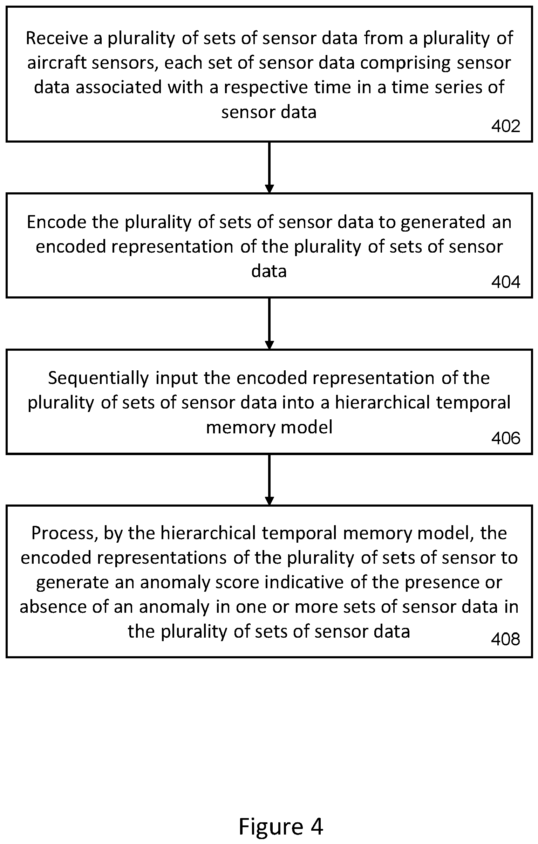

Figure 4 shows a flow diagram of an example method for anomaly detection in air data. The method may be performed by one or more computers, for example a computer acting as an anomaly detection system of an aircraft.

At operation 402, a plurality of sets of sensor data are received from a plurality of aircraft sensors. The plurality of sets of sensor data may be received as a stream of sensor data from each of the plurality of sensors. Each set of sensor data comprises sensor data from a plurality of sensors that is associated with a respective time at which the data was collected. The plurality of sets of sensor data form a time series of sensor data captured by the sensors.

At operation 404, each set of sensor data is encoded to generate an encoded representation of the plurality of sets of sensor data.

The encoded representation of each set of sensor data may be a sparse distributed representation (SDR) of the set of sensor data.

Each set of sensor data may comprise a plurality of subsets of sensor data, each corresponding to particular parameter in the air data. Each subset of sensor data may be encoded into a respective SDR using its own encoding scheme. The SDR for the set of sensor data may be generated by combining the SDRs for the subsets of sensor data, e.g. by concatenation. A time variable corresponding to the capture time of the set of sensor data may also be encoded and combined with the sensor data to form the overall SDR.

At operation 406, the encoded representations of the plurality of sets of sensor data are sequentially input into a hierarchical temporal memory model.

At operation 408, the encoded representations are processed by the hierarchical temporal memory model to generate an anomaly score. Each set of sensor data is processed by the HTM model, conditioned on previously sets of sensor data input to the HTM. The HTM may predict an SDR for a future set of sensor data based on the SDR for the current set of sensor data and previously processed sensor data.

The anomaly score is indicative of the presence or absence of an anomaly in one or more sets of sensor data in the plurality of sets of sensor data. The anomaly score may be based on a comparison of a predicted SDR of the HTM model to a ground truth SDR for a corresponding set of sensor data.

The anomaly score may be compared with a threshold score. If the threshold score is exceeded, an anomaly is determined to be present in the set of sensor data. A determination that an anomaly is present may trigger an alarm to be sent to the aircrew of the aircraft and/or transmitted to a remote monitoring system. In some implementations, a determination that an anomaly is present may alternatively or additionally trigger corrective action to be taken by the aircraft (e.g. speed or flap adjustment).

The HTM model may be updated during use based on a Hebbian rule, i.e. synapse permanence of synapses in the proximal and distal may be incremented and decremented based on the input SDRs. To prevent the HTM learning anomalous data as a "new normal", the update process may exclude sets of sensor data that are classified as anomalous.

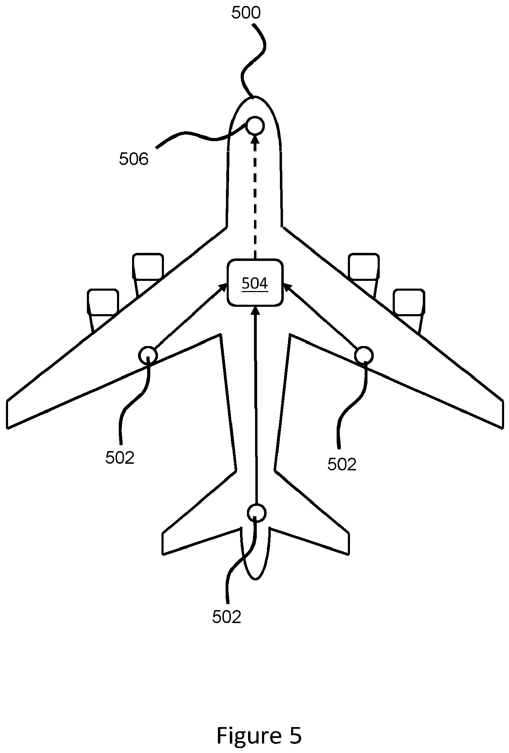

Figure 5 shows a schematic overview of an aircraft 500 comprising an anomaly detection system. The anomaly detection system comprises a plurality of sensors 502 which stream sensor data to one or more computing systems 504. The computing systems 504 process the streamed data to determine whether any anomalies are present, as described above in relation to Figures 1 to 4. If an anomaly is determined to be present, the anomaly detection system triggers an alarm/warning/anomaly indicator 506 for the aircrew. In some implementations, corrective action may be automatically triggered when an anomaly is detected.

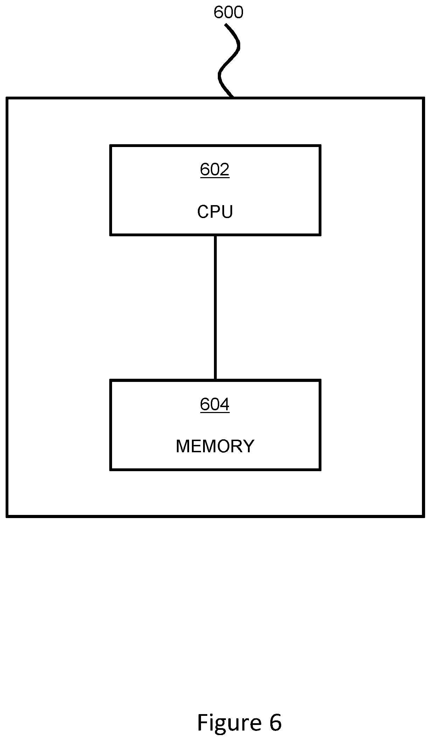

Figure 6 shows a schematic overview of an computer system/apparatus 600 for performing any of the methods described herein. The system/apparatus 800 may be a distributed system.

The apparatus (or system) 600 comprises one or more processors 602. The one or more processors control operation of other components of the system/apparatus 600. The one or more processors 602 may, for example, comprise a general-purpose processor. The one or more processors 602 may be a single core device or a multiple core device. The one or more processors 602 may comprise a Central Processing Unit (CPU) or a graphical processing unit (GPU). Alternatively, the one or more processors 602 may comprise specialised processing hardware, for instance a RISC processor or programmable hardware with embedded firmware. Multiple processors may be included.

The system/apparatus comprises a memory 604. The memory 604 may comprise a working or volatile memory. The one or more processors may access the volatile memory in order to process data and may control the storage of data in memory. The volatile memory may comprise RAM of any type, for example Static RAM (SRAM), Dynamic RAM (DRAM), or it may comprise Flash memory, such as an SD-Card.

The memory 604 may further comprise a non-volatile memory. The non-volatile memory stores a set of operation instructions for controlling the operation of the processors 602 in the form of computer readable instructions. The non-volatile memory may be a memory of any kind such as a Read Only Memory (ROM), a Flash memory or a magnetic drive memory.

The one or more processors 802 are configured to execute operating instructions to cause the system/apparatus to perform any of the methods described herein. The operating instructions may comprise code (i.e. drivers) relating to the hardware components of the system/apparatus 800, as well as code relating to the basic operation of the system/apparatus 800. Generally speaking, the one or more processors 802 execute one or more instructions of the operating instructions, which are stored permanently or semi-permanently in the non-volatile memory, using the volatile memory to store temporarily data generated during execution of said operating instructions.

Implementations of the methods described herein may be realised as in digital electronic circuitry, integrated circuitry, specially designed ASICs (application specific integrated circuits), computer hardware, firmware, software, and/or combinations thereof. These may include computer program products (such as software stored on e.g. magnetic discs, optical disks, memory, Programmable Logic Devices) comprising computer readable instructions that, when executed by a computer, such as that described in relation to Figure 6, cause the computer to perform one or more of the methods described herein.

Any system feature as described herein may also be provided as a method feature, and vice versa. As used herein, means plus function features may be expressed alternatively in terms of their corresponding structure. In particular, method aspects may be applied to system aspects, and vice versa.

Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

Although several embodiments have been shown and described, it would be appreciated by those skilled in the art that changes may be made in these embodiments without departing from the principles of this disclosure, the scope of which is defined in the claims.

## Claims

1. A computer method of anomaly detection in air data, the method comprising:

   receiving a plurality of sets of sensor data from a plurality of aircraft sensors (402), each set of sensor data comprising sensor data associated with a respective time in a time series of sensor data;
   encoding (404) the plurality of sets of sensor data to generate encoded representations of the plurality of sets of sensor data, each encoded representation corresponding to a respective time in the time series;
   sequentially inputting (406) the encoded representations of the plurality of sets of sensor data into a hierarchical temporal memory model;
   processing (408), by the hierarchical temporal memory model, the encoded representations of the plurality of sets of sensor to generate one or more anomaly scores indicative of an anomaly in the air data.

2. The method of claim 1, wherein encoding the plurality of sets of sensor data to generated the encoded representations of the plurality of sets of sensor data comprises, for each set of sensor data:

    encoding respective sensor data (204) from each sensor with a respective encoding scheme (202) to generate a plurality of subsets of encoded sensor data (206); and
    combining the plurality of subsets of encoded sensor data to generate the encoded representation (208) of the set of sensor data.

3. The method of claim 2, wherein combining the plurality of subsets of encoded sensor data (206) comprises concatenating the plurality of subsets of encoded sensor data.

4. The method of any of claims 2 or 3, further comprising, for each set of sensor data:

    encoding a time variable (204a) of the time series, the time variable corresponding to the respective time in the time series associated with the set of sensor data;
    wherein combining the plurality of subsets of encoded sensor data (206) to generate the encoded representation of each set of sensor data (208) further comprises combining the respective encoded time variable (202a).

5. The method of any preceding claim, further comprising causing an alert to be triggered based on the anomaly score.

6. The method of claim 5, wherein causing an alert to be triggered based on the anomaly score comprises:

    comparing the anomaly score to a threshold value; and
    if the threshold value is exceeded, causing the alert to be triggered.

7. The method of any preceding claim, further comprising causing an aircraft to take remedial action based on the anomaly score.

8. The method of any preceding claim, wherein the plurality of sets of sensor data from a plurality of aircraft sensors are received as a stream, and wherein the operations of encoding the sensor data (404), inputting (406) the encoded representation into the hierarchical temporal memory model and processing (408) the encoded representations are performed in real time as the plurality of sets of sensor data are received.

9. The method of any preceding claim, further comprising updating the hierarchical temporal model based on the plurality of sets of sensor data using a Hebbian rule.

10. The method of claim 9, wherein sets of sensor data that are classified as anomalous are excluded from the update process.

11. The method of claim any preceding claim, wherein processing, by the hierarchical temporal memory model, the encoded representations of the plurality of sets of sensor to generate one or more anomaly scores indicative of an anomaly in the air data comprises:

    predicting, using the hierarchical temporal memory model, a set of sensor data at a future time based on the processing of the encoded representations;
    receiving a further set of sensor data corresponding to the future time from the plurality of aircraft sensors; and
    comparing the received further set of sensor data to the predicted set of sensor data to determine the anomaly score.

12. The method of any preceding claim, wherein the plurality of sets of sensor data comprises one or more of: an altitude rate; an angle of attack; a flight phase; a true airspeed; and/or a roll rate.

13. A computer program product comprising computer readable instructions that, when executed by a computer, cause the computer to perform the method of any preceding claim.

14. A system (600) comprising:

    a plurality of sensors;
    one or more processors (602); and
    a memory (604), the memory storing computer readable instructions that, when executed by the one or more processors, cause the system to perform the method of any one of claims 1 to 12.

15. An aircraft comprising:

    a plurality of sensors;
    one or more processors; and
    a memory, the memory storing computer readable instructions that, when executed by the one or more processors, cause the system to perform the method of any one of claims 1 to 12.

Figure 1

Figure 2

204e — PoF
204d — ALTR
204c — TAS
204b — AoA
204a — t

202e — PoF encoder
202d — ALTR encoder
202c — TAS encoder
202b — AoA encoder
202a — Time encoder

202

PoF SDR
ALTR SDR
TAS SDR
AoA SDR
t SDR

SDR

Figure 3

Receive a plurality of sets of sensor data from a plurality of aircraft sensors, each set of sensor data comprising sensor data associated with a respective time in a time series of sensor data

402

Encode the plurality of sets of sensor data to generated an encoded representation of the plurality of sets of sensor data

404

Sequentially input the encoded representation of the plurality of sets of sensor data into a hierarchical temporal memory model

406

Process, by the hierarchical temporal memory model, the encoded representations of the plurality of sets of sensor to generate an anomaly score indicative of the presence or absence of an anomaly in one or more sets of sensor data in the plurality of sets of sensor data

408

Figure 4

Figure 5

Figure 6

Europäisches
Patentamt

European
Patent Office

Office européen
des brevets

# EUROPEAN SEARCH REPORT

Application Number

EP 23 27 5006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONG LEI ET AL: "Real-Time Anomaly Detection Method for Space Imager Streaming Data Based on HTM Algorithm", 2019 IEEE 19TH INTERNATIONAL SYMPOSIUM ON HIGH ASSURANCE SYSTEMS ENGINEERING (HASE), IEEE, 3 January 2019 (2019-01-03), pages 33-38, XP033552246, DOI: 10.1109/HASE.2019.00015 [retrieved on 2019-03-22] * the whole document * | 1-15 | INV. G06F18/25 |
| A | Thanh Binh: "SDR concatenate problem? . Issue #579 . htm-community/htm.core . GitHub", , 23 July 2019 (2019-07-23), XP093043717, Retrieved from the Internet: URL:https://github.com/htm-community/htm.core/issues/579 [retrieved on 2023-05-02] * Concatenating 2 SDRs together * | 1-15 | |
| A | Mark Cleverley: "Neurological Time Series/Anomaly Detection: Hierarchical Temporal Memory ¦ by Mark Cleverley ¦ Medium", , 3 August 2020 (2020-08-03), XP093043711, Retrieved from the Internet: URL:https://mark-s-cleverley.medium.com/neurological-time-series-anomaly-detection-hierarchical-temporal-memory-ad0015c32170 [retrieved on 2023-05-02] * page 8 * | 1-15 | TECHNICAL FIELDS SEARCHED (IPC) G06F |

The present search report has been drawn up for all claims

| Place of search | Date of completion of the search | Examiner |
|---|---|---|
| The Hague | 11 May 2023 | Mariggis, Ioannis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CUI et al.** The HTM Spatial Pooler-A Neocortical Algorithm for Online Sparse Distributed Coding. *Front Comput Neurosci.,* 29 November 2017, vol. 11, 111